# FASCICULE DE BREVET EUROPEEN

(11) **EP 3 055 212 B1**
(45) Date de publication et mention de la délivrance du brevet: **08.11.2017**
(21) Numéro de dépôt: 14820859.8
(22) Date de dépôt: 19.12.2014
(51) Int. Cl.: B64G 1/50, B64G 1/22, B64G 1/10, B64G 1/44, B64G 1/58

(54) **RADIATEUR À ENSOLEILLEMENT RÉDUIT POUR SATELLITE ET SATELLITE MUNI D'UN TEL RADIATEUR**
RADIATOR MIT REDUZIERTER SONNENBESTRAHLUNG FÜR SATELLITEN UND SATELLIT MIT SOLCH EINEM RADIATOR
RADIATOR WITH REDUCED SOLAR IRRADIATION FOR SATELLITE AND SATELLITE PROVIDED WITH SUCH A RADIATOR

(30) Priorité: 31.12.2013 FR 1363734
(43) Date de publication de la demande: 17.08.2016
(73) Titulaire: Airbus Defence and Space SAS, 78130 Les Mureaux (FR)
(72) Inventeur: CAËL, Philippe, F-31650 LAUZERVILLE (FR)
(74) Mandataire: Cabinet Plasseraud
(86) Numéro de dépôt international: PCT/EP2014/078838
(87) Numéro de publication internationale: WO 2015/101531

(56) Documents cités:
- EP-A1- 1 199 250
- WO-A1-99/19212
- US-A- 3 530 009
- US-A1- 2013 200 221

## Description

L'invention concerne le domaine des satellites artificiels, tels que notamment les satellites de télécommunication, en orbite géostationnaire autours d'une planète, typiquement la Terre. Plus précisément, l'invention concerne un radiateur ou un ensemble de radiateurs pour un tel satellite.

Un tel satellite se présente typiquement sous la forme d'un parallélépipède rectangle, sur lequel il est défini une face nord et une face sud, une face est et une face ouest, une face terre et une face anti-terre. Les faces nord, sud, est et ouest sont nommées ainsi en correspondance avec les points cardinaux de la planète autour de laquelle le satellite est placé. La face terre est celle en direction de la Terre, la face anti-terre est la face opposée. Ces orientations peuvent être quelque peu biaisées par rapport à leur définition pour répondre à certaines contraintes opérationnelles ou d'aménagement.

Une contrainte forte sur un satellite concerne le contrôle thermique des différents constituants et la dissipation de la puissance calorifique générée par ces différents constituants. La chaleur doit alors être évacuée du satellite vers l'espace par radiation, au moyen de radiateurs, afin de maintenir les équipements dans une plage de températures acceptable. L'efficacité en termes de capacité de réjection thermique d'un radiateur est alors d'autant plus grande qu'il est moins soumis au rayonnement solaire, également appelé ensoleillement. Une solution pour minimiser l'ensoleillement des radiateurs est de placer les surfaces radiatives, c'est-à-dire les surfaces utiles du radiateur pour évacuer la chaleur, parallèles aux faces nord et sud du satellite.

Un radiateur se présente généralement sous la forme d'un panneau dont une ou les deux faces forment les surfaces radiatives. Un fluide caloporteur circule entre les divers équipements du satellite où il est réchauffé, et passe dans les surfaces radiatives où il est refroidit. Le radiateur peut être monté directement sur la face nord ou la face sud du satellite, c'est-à-dire que la surface radiative du radiateur est confondue avec la face nord, ou la face sud, du satellite. Notamment dans le cas des radiateurs déployables, les surfaces radiatives ne sont pas confondues avec une face du satellite. Des moyens de connexion fluidique sont mis alors en place hors du satellite, entre le satellite et le radiateur.

Cependant, le satellite en orbite autour de la Terre demeure dans un plan dit d'orbite incliné par rapport aux rayons du Soleil, à cause de l'inclinaison de l'axe de rotation de la terre sur elle-même. Pour un satellite géostationnaire, l'orbite du satellite est dans un plan équatorial dont l'inclinaison par rapport au plan de l'écliptique est donc de 23,5°. En fonction des saisons, l'incidence solaire sur les radiateurs parallèles aux faces nord et sud du satellite va alors varier de -23,5° à +23,5°. Ces deux valeurs maximales sont atteintes aux solstices, en passant par la valeur de 0° aux équinoxes. Par conséquent, même en plaçant les surfaces radiatives parallèles aux faces nord et sud du satellite, elles reçoivent tout de même une partie non négligeable du rayonnement solaire, dégradant le rendement du radiateur malgré la présence de revêtements thermiques réduisant l'absorptivité solaire.

Une autre contrainte sur un satellite concerne l'encombrement. En effet, le satellite comporte divers équipements et notamment des antennes dont le champ de vue doit être dégagé, des propulseurs par exemple à plasma, générant des jets pouvant détériorer les équipements à proximité, ou encore des panneaux solaires dont la surface exposée au Soleil doit être la plus grande possible. En outre, ces équipements sont également à prendre en compte lors de la phase de lancement du satellite, au cours de laquelle le satellite est installé dans un lanceur et doit être compatible du volume sous coiffe. En général, les équipements sont alors pliés, puis déployés une fois le satellite lancé en orbite. On comprend alors que plus l'encombrement du satellite est important, plus il est difficile de le placer dans le lanceur. Les radiateurs viennent ajouter à l'encombrement.

Ainsi, la conception et le positionnement d'un radiateur sur un satellite doivent tenir compte de cette double contrainte : minimiser le rayonnement solaire reçu par le radiateur tout en tenant compte de l'encombrement sur le satellite.

Plusieurs solutions ont déjà été proposées dans le passé.

Une première solution est décrite dans le document US 6,669,147, décrivant un radiateur déployable pour satellite, monté au moyen d'une charnière dont l'angle est incliné par rapport aux axes principaux du satellite. Le radiateur ne viendrait alors pas gêner les autres équipements. Il est précisé que lorsque le radiateur est articulé par un moteur selon un axe, alors son ensoleillement peut être réduit, mais ce n'est qu'en l'articulant selon deux axes que l'ensoleillement peut être rendu nul. Il est donc proposé un mécanisme permettant d'obtenir deux axes de rotation du radiateur, dans lequel une première pièce annulaire loge un moteur pour pivoter une pièce intermédiaire autour d'un premier axe. Le mécanisme comprend en outre un deuxième moteur annulaire, logé dans la pièce intermédiaire pour faire pivoter une troisième pièce autour d'un second axe.

Le document US 7,874,520 propose également un radiateur déployable, articulé sur le satellite selon deux liaisons de type cardan, de sorte que le radiateur peut être pivoté autour d'un premier axe et autour d'un deuxième axe, incliné par rapport au premier axe.

Ces deux solutions permettent alors, grâce au pivotement du radiateur par rapport à deux axes, de diminuer voire d'annuler l'ensoleillement de la surface radiative du radiateur.

Toutefois, ces solutions ont pour inconvénient d'être complexes. En effet, elles impliquent de prendre en compte deux degrés de liberté en rotation indépendants, de sorte que le ou les mécanismes de contrôle sont formés de plusieurs pièces pour atteindre le résultat, augmentant l'encombrement et les coûts. En outre, les solutions à deux axes de l'état de la technique posent un problème quant au passage des connexions fluidiques entre le satellite et les surfaces radiatives du radiateur, les connexions devant accompagner les deux degrés de liberté en rotation. Les conduits subissent également des contraintes importantes dus aux mouvements qu'ils doivent suivre, pouvant accélérer leur usure. Il est alors en général développé des solutions spécifiques aux connexions fluidiques, augmentant les coûts du satellite.

Le document WO 99/19212 propose un radiateur pour satellite selon le préambule de la revendication 1.

Il existe un besoin pour un nouveau radiateur pour satellite apportant notamment une solution aux inconvénients précités.

Ainsi, un premier objet de l'invention est de proposer un radiateur pour satellite pour lequel l'ensoleillement des surfaces radiatives est nul, avec un mécanisme simple.

Un deuxième objet de l'invention est de proposer un radiateur pour satellite dont l'encombrement est réduit.

Un troisième objet de l'invention est de proposer un radiateur pour satellite pour lesquels les connexions fluidiques peuvent être facilement mises en place.

Un quatrième objet de l'invention est de proposer un radiateur pour satellite augmentant peu les coûts du satellite.

Un cinquième objet de l'invention est de proposer un radiateur pour satellite compact minimisant le volume occupé sous la coiffe en phase de lancement.

Selon un premier aspect, l'invention propose un radiateur pour satellite destiné à être mis à poste en orbite géostationnaire autour de la Terre dans un plan incliné par rapport au plan de l'écliptique, le radiateur présentant les mesures techniques de la revendication 1.

Le radiateur comprend ainsi un unique axe d'articulation, à savoir l'axe de rotation du pied support. L'inclinaison fixe de la surface radiative assure, de manière simple et peu coûteuse, un ensoleillement nul de celle-ci. En choisissant l'angle de fonctionnement égal, ou presque égal, à 23,5°, l'ensoleillement, et donc l'échauffement, de la surface radiative est quasi nul, augmentant l'efficacité du radiateur pour refroidir le satellite. Ainsi, un seul moteur est requis pour contrôler l'unique degré de liberté en rotation du radiateur. La conception est ainsi simplifiée.

Par orbite géostationnaire, on ne se restreint pas aux orbites strictement équatoriales, mais aussi aux orbites légèrement inclinées par rapport à l'équateur terrestre (de +/- 3° voire +/- 5°). En fonctionnement nominal, un contrôle d'orbite dite Nord-Sud permet de maintenir une inclinaison faible par rapport au plan équatorial. Néanmoins pour certaines missions, une inclinaison plus importante peut-être acceptable. C'est souvent le cas en fin de vie du satellite, où ce contrôle d'orbite est arrêté, la mission du satellite pouvant se poursuivre pendant un certain temps. Parfois, une orbite légèrement inclinée est acceptable en début de vie du satellite. Si l'on veut optimiser le radiateur pour ce type d'orbite, l'angle fonctionnement est alors différent de 23,5°.

Selon un mode de réalisation, le panneau est monté pivotant autour de l'axe de radiation. Le radiateur comprend en outre un système de guidage du débattement du panneau limitant la rotation du panneau autour de l'axe de rotation, de manière à maintenir le panneau dans une orientation donnée par rapport au satellite.

Dans ce cas, le pied support peut comprendre deux portions à savoir :
- une première portion apte à être montée sur la face support du satellite,
- une seconde portion sur laquelle le panneau est monté.

Le panneau est alors monté sur la seconde portion par l'intermédiaire d'un palier pour autoriser la rotation du panneau autour de l'axe de radiation. Le guidage du débattement permet notamment de contrôler l'encombrement généré par le radiateur.

Par exemple, les deux portions du pied support sont rectilignes et dans le prolongement l'une de l'autre, la première portion s'étendant selon l'axe de rotation et la deuxième portion s'étendant selon l'axe de radiation.

Plus précisément, le système de guidage du débattement peut comprendre un rail, s'étendant parallèlement à l'axe de rotation et une pince fixée rigidement au panneau, les bras de la pince coopérant avec le rail pour limiter le débattement du panneau autour de l'axe de rotation.

Selon un exemple, l'angle de fonctionnement est de 23,5°. Cependant, l'angle de fonctionnement peut être supérieur à 23,5° pour un fonctionnement en orbite inclinée. Dans ce cas, le radiateur comprend alors de plus des moyens de modulation de la vitesse de rotation du pied support.

Avantageusement, le dispositif peut en outre inclure un système permettant de modifier légèrement l'inclinaison des surfaces radiatives par rapport au satellite en fonction de l'évolution de l'inclinaison de l'orbite.

Avantageusement, le panneau comprend deux surfaces radiatives parallèles et orientées dans des directions opposées.

Afin de palier à certains défauts ayant pour conséquence un ensoleillement des surfaces radiatives, le panneau peut comprendre un déflecteur placé sur toute la périphérie, en saillie par rapport à la surface radiative, pour bloquer une partie des rayons du Soleil.

Le radiateur peut comprendre en outre un capteur solaire relié aux moyens de pilotage et de motorisation pour faire pivoter le pied support, de manière à vérifier et/ou à asservir l'orientation du panneau par rapport au Soleil.

Le radiateur peut comprendre par ailleurs des moyens de connexion fluidique aptes à être connectés avec des moyens de connexion complémentaire d'un satellite, les moyens de connexion fluidique incluant au moins un circuit interne comprenant deux conduits flexibles passant à l'intérieur du pied support du radiateur, et/ou au moins un circuit externe comprenant deux conduits flexibles passant à l'extérieur du pied support du radiateur.

Selon un deuxième aspect, l'invention propose un satellite apte à être mis en orbite autour de la Terre, et comprenant au moins un radiateur tel que présenté ci-dessus. Le radiateur est monté sur une face support du satellite, le pied support du radiateur étant fixé sur le satellite de sorte que l'axe de rotation est perpendiculaire à une face de référence du satellite, la face de référence étant une face nord ou une face sud du satellite.

Le radiateur peut avantageusement prendre une position repliée sur le satellite dans laquelle le panneau est contre la face support du satellite sur laquelle il est fixé, et une position déployée dans laquelle le panneau est amené incliné par rapport à la face support de l'angle de fonctionnement.

D'autres avantages apparaîtront à la lumière de la description de modes de réalisation particuliers de l'invention accompagnée des figures dans lesquelles :
La figure 1 est une vue schématique en coupe d'un radiateur monté sur une face du satellite et de son mécanisme, selon un exemple de réalisation de l'invention.
La figure 2 est une représentation schématique d'un satellite muni du radiateur de la figure 1, en orbite autour de la Terre, le satellite étant représenté pour trois positions différentes autour de la planète, la figure 1 montrant le radiateur pour une position du satellite de la figure 2.
Les figures 3 et 4 sont des vues similaires à celles de la figure 1, pour les deux autres positions du satellite de la figure 2.
Les figures 5a et 5b représentent quatre positions du satellite autour de la Terre, respectivement lors d'un solstice et lors d'une équinoxe.
Les figures 6a à 6d représentent chacune de manière schématique le satellite de la figure 5b dans les quatre positions correspondant respectivement aux heures 0h, 6h, 12h et 18h.
La figure 7 est une vue complète, de côté, du radiateur des figures 1 à 6.
La figure 8 est une vue en coupe de la figure 7, illustrant le passage des moyens de connexion fluidique, par l'intérieur du dispositif.
La figure 9 est une complète similaire à celle de la figure 7, illustrant une variante de réalisation des moyens de connexion fluidique, par l'extérieur du dispositif.
La figure 10 est une vue d'élévation et de détail des moyens d'assemblage du radiateur sur une face du satellite, comprenant un mécanisme de déploiement dans une première position, le radiateur étant représenté sans panneau.
La figure 11 est une vue d'élévation du radiateur dans la position de la figure 10, avec le panneau.
La figure 12 est une vue similaire à celle de la figure 10, le mécanisme de déploiement étant dans une deuxième position.
La figure 13 est une vue d'élévation du radiateur dans la position de la figure 12, avec le panneau.
La figure 14 est une vue similaire à celle des figures 10 et 12, le mécanisme de déploiement étant dans une troisième position.
La figure 15 est une vue similaire à celle des figures 10, 12 et 14, le mécanisme de déploiement étant dans une quatrième position.
La figure 16 est une vue d'élévation du radiateur dans la position de la figure 15, avec le panneau.
La figure 17 est une vue d'élévation du radiateur, sans le panneau, avec les moyens d'assemblage dans la position de la figure 15, sous un autre angle.
Les figures 18 à 20 sont des vues similaires à celle de la figure 17, le radiateur étant respectivement dans trois positions différentes.

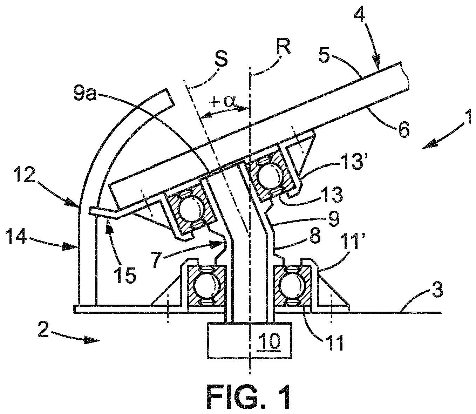

Sur la figure 1, il est représenté, en coupe et de manière schématique, un exemple de réalisation d'un radiateur **1,** destiné à être monté en rotation autour d'un axe **R** de rotation sur une face d'un satellite **2.** L'axe R de rotation du radiateur 1 une fois monté sur le satellite 2 est en pratique orienté nord-sud, c'est-à-dire qu'il est perpendiculaire aux faces nord et sud du satellite 1. Toutefois, la face sur laquelle le radiateur 1 est monté peut être n'importe quelle face du satellite 2. Dans le mode de réalisation de la figure 1, il s'agit de la face **3** nord du satellite 1. Le satellite 2 a pour but notamment d'être mis en orbite géostationnaire, autour de la Terre **T.**

Le radiateur 1 comprend un panneau **4,** lequel présente au moins une surface **5** radiative, sensiblement plane. De préférence, les deux faces **5, 6** opposées du panneau 4 sont des surfaces radiatives. Les surfaces 5, 6 radiatives sont orientées par un même axe **S** dit de radiation, c'est-à-dire l'axe perpendiculaire aux surfaces 5, 6 radiatives. Une première face 5 est dite supérieure, et la deuxième face 6 est dite inférieure.

Comme il sera vu plus loin, l'axe R de rotation et l'axe S de radiation sont inclinés l'un par rapport à l'autre, d'un angle différent de 90°. En d'autres termes, l'axe R de rotation n'est pas parallèle aux surfaces 5, 6 radiatives.

De préférence, le panneau 4 s'étend sur un côté du satellite 2, au-delà de la face du satellite 2 sur laquelle il est monté, de manière à ne pas gêner d'autres équipements du satellite requérant une proximité avec le satellite 2, et à offrir aux faces 5 et 6 un bon facteur de vue, également appelé facteur de forme, vers l'espace.

Afin d'être monté sur la face 3 nord du satellite 2, le radiateur 1 comprend des moyens d'assemblage, lesquels comportent un pied **7** support, rigide, c'est-à-dire qu'aucune portion du pied 7 n'est mobile par rapport à une autre portion.

L'orbite géostationnaire est définie comme se situant à environ 36 000 km d'altitude au dessus de l'équateur, dans le plan équatorial de la Terre, et d'excentricité nulle par rapport à la Terre. Bien que l'orbite géostationnaire fasse référence à la Terre, le satellite 2 muni du radiateur 1 décrit ici pourra être adapté pour d'autres planètes.

Comme présenté en introduction, l'orbite géostationnaire, dans le plan équatorial de la Terre, est donc inclinée par rapport à l'écliptique, d'un angle de 23,5°. Ainsi, l'axe S de radiation est incliné d'un angle α de fonctionnement par rapport à l'axe R de rotation, lequel angle α est alors choisi égal à 23,5°. Plus généralement, l'angle α de fonctionnement pourra être choisi en fonction des besoins dans une plage de valeurs comprises entre 0°et 90°, les bornes de la plage étant exclues.

Le satellite 2 en orbite géostationnaire est orienté de telle manière que ses faces dites nord et sud sont parallèles au plan de l'orbite géostationnaire, et ce tout au long de son fonctionnement. En effet, notamment pour les satellites de télécommunication, les instruments de type antenne sont montés sur le satellite selon une orientation précise, qui doit être conservée. Ainsi, l'orientation du satellite par rapport à la Terre est en général maintenue identique tout au long de son fonctionnement.

L'inclinaison de l'axe S de radiation par rapport à l'axe R de radiation implique que les surfaces 5, 6 radiatives se retrouvent inclinées de l'angle α de fonctionnement par rapport à la face 3 nord du satellite 2. Ainsi, les surfaces radiatives peuvent demeurer parallèles au plan de l'écliptique pour toute rotation du pied 7 support autour de l'axe R de rotation. Leur ensoleillement est alors nul, et leur capacité de réjection thermique est alors maximisée.

L'angle α de fonctionnement est fixe, c'est-à-dire qu'il est déterminé au moment de la conception du radiateur. Il n'est donc pas modifié au cours du fonctionnement du radiateur. Seule la rotation du pied 7 support autour de l"axe R de rotation doit être commandée pour conserver les surfaces 5, 6 radiatives parallèles au plan de l'écliptique. Les moyens d'assemblage sont donc grandement simplifiés par rapport à l'état de la technique impliquant deux axes.

En variante, des moyens de modifications limités (de quelques degrés) de cet angle α de fonctionnement en opération pour compenser une évolution de l'inclinaison de l'orbite peuvent cependant être prévus. Par exemple un dispositif à deux positions pourrait être utilisé. Plus précisément, comme cela sera vu plus loin, ce n'est pas l'angle α de fonctionnement entre l'axe R de rotation et l'axe S de radiation qui est modifié, mais l'angle entre les surfaces 5, 6 radiatives et la face 3 nord du satellite, de sorte que, par compensation, les surfaces 5, 6 radiatives sont ramenées dans le plan de l'écliptique.

Selon l'exemple de réalisation présenté ici, le pied 7 support comprend deux portions **8, 9,** rectilignes, dans le prolongement l'une de l'autre. Une première portion 8 s'étend selon l'axe R de rotation, et la seconde portion 9 s'étend selon l'axe S de radiation. Les deux portions 8, 9 du pied 7 sont donc inclinées l'une par rapport à l'autre selon l'angle α de fonctionnement. La première portion 8 est montée sur la face 3 nord au moyen d'un palier **11,** et est reliée aux moyens 10 de pilotage et de motorisation. La première portion 8 s'étend sensiblement perpendiculairement à la face 3 nord. Par exemple, la bague intérieure du palier est fixée sur le pied 7, et la bague extérieure est fixée sur la face 3 nord du satellite. Un boitier **11',** fixé à la bague extérieure, recouvre le palier 11 pour le protéger. Lors d'une rotation complète du pied 7 support autour de l'axe R de rotation, la deuxième portion 9 décrit donc un cône, d'angle égal à l'angle α de fonctionnement.

La première portion **8** du pied 7 est destinée à être montée sur la face 3 nord du satellite 2, autour de l'axe R de rotation. Le panneau 4 est fixé sur la seconde portion **9** du pied 7. En pratique, le panneau 4 surmonte la seconde portion 9, c'est-à-dire qu'il est fixé à l'extrémité **9a** libre de la seconde portion 9.

En variante, le pied 7 support peut être courbe. Dans ce cas, la courbe décrite par le pied 7 support comprend au moins une première tangente sensiblement parallèle à l'axe R de rotation et une deuxième tangente inclinée de l'angle α de fonctionnement par rapport à la première tangente. Le panneau 4 est alors monté perpendiculairement à la seconde tangente.

Des moyens **10** de pilotage et de motorisation sont prévus pour faire pivoter le pied 7 support autour de l'axe R de rotation.

Le pied 7 support peut être rigidement fixé sur le panneau 4. Dans ce cas, pour une rotation complète du pied 7 support autour de l'axe R de rotation, le panneau 4 décrit une trajectoire circulaire, de rayon correspondant à la distance entre l'axe R de rotation et le point du panneau 4 le plus éloigné de l'axe R de rotation, dans un plan perpendiculaire à l'axe R de rotation. Or, une telle trajectoire peut être gênante pour les autres équipements sur le satellite. Une telle trajectoire limite en outre les dimensions du panneau 4, pour éviter les collisions entre le panneau 4 et le satellite 2 lors de la rotation autour de l'axe R de rotation.

Ainsi, le radiateur 1 comprend un système **12** de guidage du débattement du panneau. Le débattement est défini ici comme étant l'arc de cercle décrit par un point du panneau 4, lorsque vu dans un plan perpendiculaire à l'axe R de rotation, le centre du cercle étant sur l'axe R de rotation. Le débattement peut donc être défini par une longueur, qui est le rayon du cercle décrit, et par un angle, qui est l'angle balayé sur ce cercle : plus ce rayon et cet angle sont grands, plus le débattement est important.

Pour guider le débattement, le panneau 4 est monté pivotant sur la seconde portion 9 du pied 7, autour de l'axe S de radiation. Par exemple, un second palier **13** entre la seconde portion 9 du pied 7 et le panneau 4 permet d'obtenir cette rotation. La bague extérieure du second palier 13 est fixée rigidement au panneau 4 par l'intermédiaire d'un boîtier **13'** recouvrant le roulement, la bague intérieure étant bloquée sur le pied 7 support.

Le système 12 de guidage comprend alors par exemple une tige formant rail **14** de guidage, fixée rigidement sur la face 3 nord, et s'étendant parallèlement à l'axe R de rotation. Un élément **15** de type pince, fixé rigidement au panneau 4, coopère alors avec le rail 14 en l'enserrant de part et d'autre, selon deux directions opposées, et limitant l'angle de débattement. Ainsi, le panneau 4 est empêcher de pivoter avec le pied 7 support, et pivote autour de l'axe S de radiation lorsque les moyens 10 de pilotage et de motorisation commandent la rotation du pied 7 support. Comme représenté sur les figures 1 à 3, le rail peut être courbe, de manière adaptée au mouvement du panneau 4.

En pratique, un angle de débattement nul n'est pas toujours nécessaire, et un petit débattement peut être autorisé, dépendamment de l'encombrement autour du satellite 2. Dans ce cas, le panneau 4 effectue une rotation autour de l'axe R de rotation lorsque le pied 7 support pivote autour de l'axe de rotation, mais uniquement selon un arc de cercle de quelques degrés. L'amplitude maximale du débattement est comme expliquée plus haut fonction des contraintes dues aux autres équipements du satellite. En pratique, un angle de débattement de moins de 90° est acceptable sur la plupart des satellites. Cependant, un débattement bien inférieur sera en pratique souvent préféré pour diminuer l'encombrement généré par le débattement du radiateur 1.

Par ailleurs, la longueur du débattement dépend notamment de la longueur du pied 7 support, et plus précisément de la longueur de la seconde portion 9 du pied 7 support. En effet, plus la longueur de la seconde portion 9 est importante, plus le rayon du cercle décrit par l'extrémité 9a libre de la seconde portion est important, entrainant par là le panneau 4 sur un débattement d'une plus grande amplitude.

Il en résulte que le débattement peut être ajusté en combinant l'effet du système 12 de guidage limitant le débattement angulaire avec le choix de la longueur de la seconde portion 9.

En conséquence du système 12 de guidage du débattement, lors de la rotation du pied 7 support autour de l'axe R de rotation, le panneau 4 a un mouvement de basculement autour de l'axe R de rotation, afin de demeurer parallèle au plan de l'écliptique. Plus précisément, les faces 5, 6 radiatives du panneau 4 sont alors toujours inclinées par rapport à la face 3 nord du satellite 2 d'un angle égal à l'angle α de fonctionnement. Cependant, le plan dans lequel cette inclinaison est mesurable change avec la rotation du pied 7 support autour de l'axe R de rotation, suivant l'orientation de la seconde portion 9.

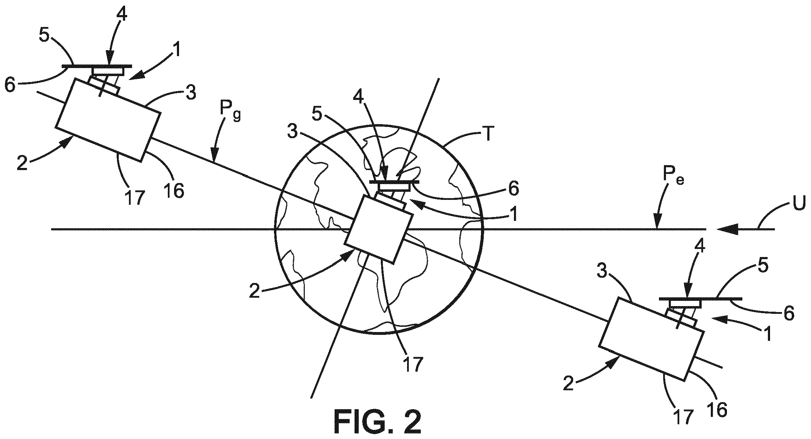

On a représenté sur la figure 2, de manière schématique, le satellite 2 en orbite géostationnaire équatorial autour de la Terre T, dans trois positions différentes. Le plan **P_{g}** de l'orbite géostationnaire équatorial du satellite 2 est incliné par rapport au plan **Pₑ** de l'écliptique, d'un angle de 23,5° environ.

Les moyens 10 de pilotage et de motorisation sont adaptés pour que la vitesse de rotation du pied 7 support suive la rotation de la Terre T. Plus précisément, la Terre T effectue une rotation complète, soit 360°, autour de son axe en une journée dite sidérale, en 23 heures, 56 minutes et 4,1 secondes, comme cela est communément admis. En outre, la Terre met 24 heures pour que le Soleil retrouve, par rapport à un même point de la Terre, la même position, la Terre ayant alors effectué une rotation de 360,9856° environ, autour de son axe, définissant ainsi un jour solaire

Par conséquent, les moyens 10 de pilotage et de motorisation sont réglés pour que le pied 7 support effectue une rotation complète, soit 360° pour garder une orbite géostationnaire, en 23 heures, 56 minutes et 4,1 secondes pour que les surfaces 5, 6 radiatives demeurent parallèles au plan Pₑ de l'écliptique. Le sens de rotation du pied 7 support est l'inverse de celui de la Terre T. Ainsi, si la Terre T tourne en sens trigonométrique, le pied 7 support tourne dans le sens anti-trigonométrique. La vitesse de rotation du pied 7 support est constante.

Grâce à la rotation du pied 7, autour d'un unique axe, l'axe R de rotation, à partir d'une position initiale dans laquelle les surfaces 5, 6 radiatives sont parallèles au plan Pₑ de l'écliptique, et à vitesse de rotation constante, le parallélisme de la position initiale est conservé tout au long de l'orbite géostationnaire du satellite 2, sans que des réglages ne soient nécessaires au cours du fonctionnement du satellite 2.

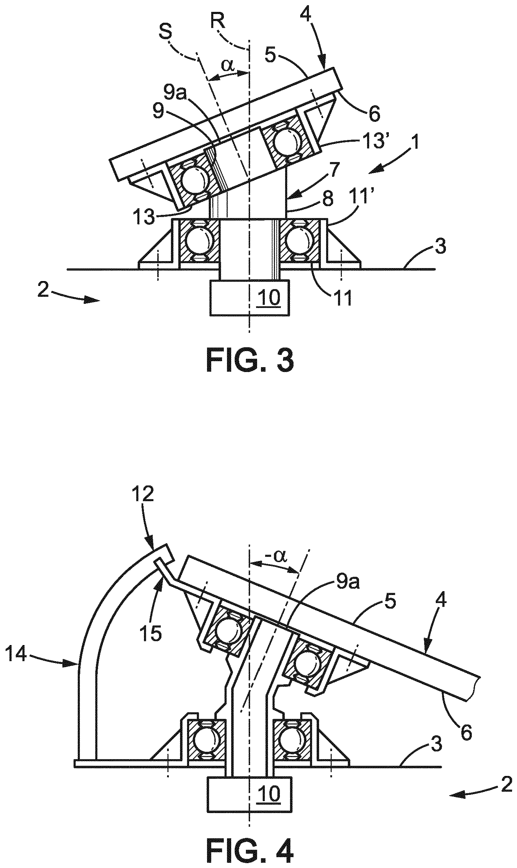

Plus précisément, la figure 1 illustre une des trois positions du satellite 2, quand les rayons U du Soleil atteignent le satellite 2 par la face 16 terre. Les surfaces 5, 6 radiatives sont inclinées de l'angle α de fonctionnement par rapport à la face 3 nord du satellite 2, lorsque vu dans un plan parallèle aux faces est et ouest du satellite 2. En effet, c'est alors dans ce plan que ce trouvent les deux portions 8,9 inclinées du pied 7 support. Lorsque le satellite 2 se déplace sur son orbite, les moyens 10 de pilotage et de motorisation entraînent la rotation du pied 7 support autour de l'axe R de rotation les deux portions 8, 9 inclinées changent alors de plan. Le panneau 4 bascule, de sorte que l'inclinaison d'angle α de fonctionnement entre les surfaces 5, 6 radiatives et la face 3 nord change également de plan. Par exemple, sur la figure 3 illustrant le satellite 2 après une rotation de 90° sur son orbite géostationnaire à partir de la position de la figure 1, les rayons U du satellite 2 l'atteignant par la face est ou la face ouest, l'inclinaison d'angle α de fonctionnement se trouve dans un plan parallèle aux faces terre et anti-terre du satellite 2, qui est le plan contenant le pied 7 support. Lorsque le satellite 2 décrit de nouveau une rotation de 90° sur son orbite géostationnaire, il se met dans une troisième position, illustrée sur la figure 4, dans laquelle les rayons U du Soleil l'atteignent par sa face anti-terre. Ainsi, l'inclinaison d'angle α de fonctionnement entre les surfaces 5, 6 radiatives et la face 3 nord se trouve de nouveau dans un plan parallèle aux faces est et ouest du satellite 2, l'angle α de fonctionnement étant cependant le contraire de celui de la première position. On a lors noté +α l'angle de d'inclinaison des surfaces 5, 6 radiatives sur la figure 1, et -α cet angle sur la figure 4.

L'angle α de fonctionnement correspondant à l'angle entre le plan P_{g} de l'orbite géostationnaire et l'angle Pₑ de l'écliptique, et la face 3 nord étant parallèle au plan P_{g} de l'orbite géostationnaire, les surfaces 5, 6 radiatives sont alors toujours parallèles au plan de l'écliptique. Les surfaces 5, 6 radiatives ont alors un ensoleillement nul. La vitesse de rotation constante du pied 7 support autour de l'axe R de rotation, suivant la rotation de la Terre permet au radiateur 1, à partir d'une position initiale dans laquelle les surfaces 5, 6 radiatives sont parallèle au plan Pₑ de l'écliptique, de conserver les surfaces 5, 6 radiatives parallèles au plan Pₑ de l'écliptique lorsque le satellite 2 suit son orbite géostationnaire.

Bien que sur les figures 1 à 4, un seul radiateur est monté, sur la face 3 nord, en pratique le satellite 2 comprendra au moins un deuxième radiateur 1, monté sur la face **17** sud du satellite et qui fonctionnera de manière identique.

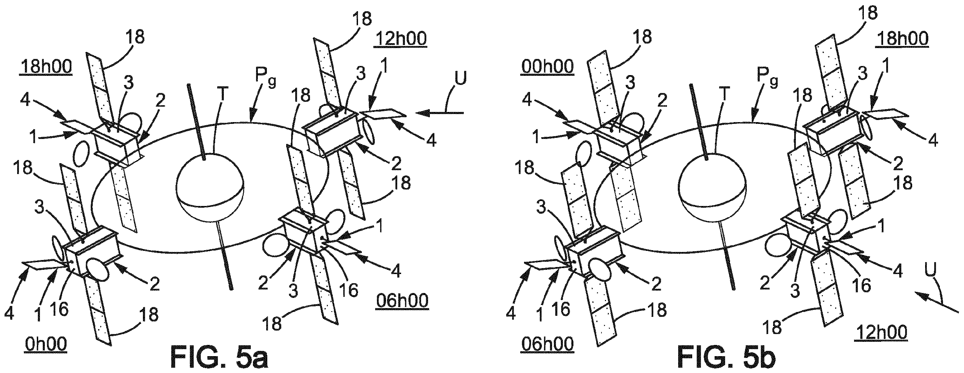

Les figures 5a et 5b illustrent quatre positions du satellite 2 en orbite géostationnaire autour de la Terre, respectivement lors d'un solstice et lors d'une équinoxe, dans une variante de réalisation. Dans cette variante, le radiateur 1 n'est pas monté sur la face 3 nord du satellite 2, mais est monté sur la face **16** anti-terre. En effet, la face 3 nord et la face **17** sud du satellite 2 sont en général occupées par des panneaux **18** solaires, orientés de manière à recevoir un ensoleillement maximal. Le fait de placer le pied 7 support sur la face 16 anti-terre ne modifie en rien le principe ni altère les avantages précités. En effet, l'axe R de rotation est toujours orienté nord-sud, de sorte que le mouvement du panneau 4 est identique, avec les surfaces 5, 6 radiatives demeurant parallèles au plan de l'écliptique.

Sur la figure 5a, lors d'un solstice, les rayons U du Soleil viennent frapper la face Terre, sur laquelle le radiateur 1 est monté, dans une première position notée 00h. Les surfaces 5, 6 radiatives sont alors inclinées de l'angle α de fonctionnement par rapport à la face 3 nord, laquelle est toujours parallèle au plan P_{g} de l'orbite géostationnaire, dans un plan parallèle aux faces est et ouest. Lorsque le satellite 2 s'est déplacé de 90° le long de l'orbite géostationnaire, il arrive dans une deuxième position marquée 06h, dans laquelle les rayons U du Soleil atteignent la face est du satellite 2. Le pied 7 de support a suivi le déplacement du satellite 2, de sorte que les surfaces 5, 6 radiatives sont inclinées de l'angle α de fonctionnement par rapport à la face 3 nord dans un plan parallèle aux faces terre et anti-terre. Le satellite poursuit son orbite sur 90°, pour arriver dans la troisième position marquée 12h, dans laquelle les rayons U du Soleil atteignent le satellite 2 par la face anti-terre. Les surfaces 5, 6 radiatives sont de nouveau inclinées dans un plan parallèle aux faces est et ouest, mais d'un angle α, contraire à celui de la position 00h. De même, en se déplaçant encore de 90°, le satellite 2 arrive dans une quatrième position marquée 18h, similaire à celle marquée 06h. Dans cette quatrième position, les rayons U du Soleil atteignent le satellite par la face ouest. Les surfaces 5, 6 radiatives sont de nouveau inclinées dans un plan parallèle aux terre et anti-terre, mais d'un angle α, contraire à celui de la position marquée 06h.

Sur la figure 5b, lors d'une équinoxe, le radiateur prend les mêmes positions que celles de la figure 5a. L'équinoxe ne modifie pas le principe du radiateur 1 décrit pour un solstice. En effet, l'inclinaison entre le plan P_{g} de l'orbite géostationnaire et le plan Pₑ de l'écliptique ne change pas entre les solstices et les équinoxes. Ainsi, l'angle α de fonctionnement n'est pas modifié au cours de l'année solaire. Encore une fois, le radiateur 1 ne nécessite alors aucune maintenance pour tenir compte des changements de positions du Soleil par rapport à la Terre.

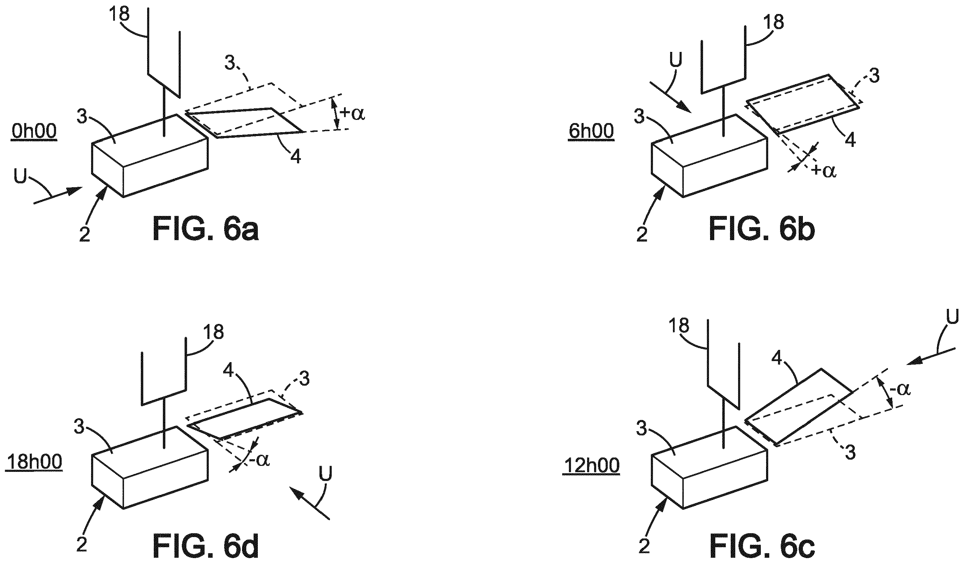

Plus précisément encore, les figures 6a à 6d représentent les quatre positions du satellite de la figure 5b. La face 3 nord du satellite, parallèle au plan P_{g} de l'orbite géostationnaire, est représentée en traits discontinus à proximité du panneau 4, afin d'illustrer l'inclinaison des surfaces 5, 6 radiatives. Ainsi, une première position marquée 00h est identique à la position marquée 18h de la figure 5a, l'inclinaison entre les faces 5, 6 radiatives et la face 3 nord étant notée +α dans un plan parallèle aux faces est et ouest. Une deuxième position marquée 06h est identique à la position marquée 00h de la figure 5a, l'inclinaison entre les faces 5, 6 radiatives et la face 3 nord étant notée +α dans un plan parallèle aux faces terre et anti-terre. Une troisième position marquée 12h est identique à la position marquée 06h de la figure 5a, l'inclinaison entre les faces 5, 6 radiatives et la face 3 nord étant notée -α dans un plan parallèle aux faces est et ouest. Une quatrième position marquée 18h est identique à la position marquée 12h de la figure 5a, l'inclinaison entre les faces 5, 6 radiatives et la face 3 nord étant notée -α dans un plan parallèle aux faces terre et anti-terre.

De même que précédemment, bien que le satellite 1 des figures 5 à 6 comprenne un unique radiateur 1, monté sur la face 16 anti-terre, en pratique le satellite pourra comprendre deux radiateurs 1 montés sur la face anti-terre, de manière à laisser la face terre disponible pour l'aménagement des antennes de communication avec la Terre.

La vitesse de rotation des panneaux 10 solaires est différente de celle des radiateurs 1. En effet, alors que les radiateurs effectuent une rotation de 360° en 23 heures, 56 minutes et 4,1 secondes pour suivre l'orbite géostationnaire, et conserver les surfaces 5, 6 radiatives parallèles au plan Pₑ de l'écliptique, les panneaux 18 solaires restent perpendiculaires aux rayons du Soleil. Les panneaux 18 solaires doivent donc suivre le jour solaire, c'est-à-dire pivoter de 360,9856° en 24 heures.

Afin de surveiller le positionnement correct du panneau par rapport à l'écliptique, le radiateur peut comprendre en outre au moins un capteur solaire, relié aux moyens 10 de pilotage et de motorisation, de manière à vérifier et/ou à asservir l'orientation du panneau par rapport au Soleil. Le capteur solaire permet de vérifier l'absence d'ensoleillement des surfaces 5, 6 radiatives, et de communiquer avec les moyens 10 de pilotage et de motorisation pour éventuellement entreprendre des opérations correctives sur la rotation du pied 7 support.

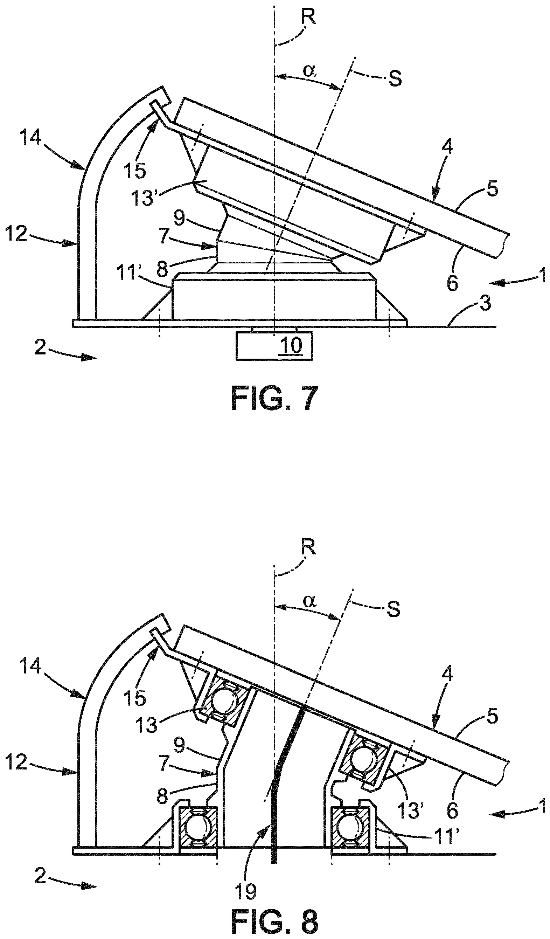

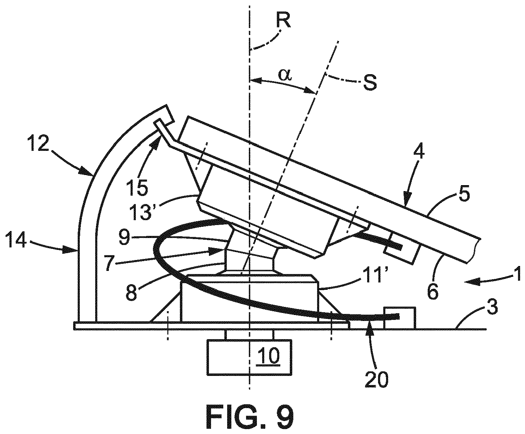

Le pied 7 support permet donc, grâce à la commande de la rotation autour de l'unique axe R de rotation, de conserver les surfaces 5, 6 radiatives parallèles au plan de l'écliptique. Il en résulte notamment que les moyens de connexion fluidique entre le panneau 4 et le satellite 2 sont simplifiés. Par exemple (figures 7 et 8), les moyens de connexion fluidique comprennent un circuit **19** interne au pied 7 support. Le circuit 19 interne comprend au moins deux conduits flexibles, à savoir un premier conduit pour la circulation d'un fluide caloporteur du satellite 2 vers le panneau 4 et un second conduit pour la circulation du fluide caloporteur du panneau 4 vers le satellite 2. A cet effet, les deux portions 8, 9 du pied 7 support sont creuses, permettant le passage des deux conduits entre le satellite 2 et le panneau 4. Les conduits du circuit 19 interne sont alors cachés dans le pied 7 support, qui forme un manchon de protection pour les conduits flexibles. En variante (figure 9), les moyens de connexion fluidique comprennent un circuit **20** externe au pied 7 support. De même que précédemment, le circuit externe comprend au moins deux conduits flexibles. Les deux conduits flexibles du circuit 20 externe s'étendent à l'extérieur du pied 7 support, entre le satellite 2 et le panneau. Plus précisément, afin de ne pas gêner la rotation du pied 7 support, les conduits du circuit 20 externe décrivent une portion d'hélice, par exemple sur un pas. Ainsi, comme le panneau 4 ne pivote pas, ou avec un débattement limité, autour de l'axe R de rotation mais a simplement un mouvement de basculement, les conduits flexible du circuit 19 interne et / ou du circuit 20 externe ne subissent pas ou peu de contraintes.

L'ensoleillement des faces 5, 6 radiatives, parallèles au plan de l'écliptique, est alors nul. Cependant, certains défauts peuvent rendre ce parallélisme imparfait, et entraîner un ensoleillement non nul sur les surfaces 5, 6 radiatives. Par exemple, l'orbite réelle du satellite 2 peut être légèrement inclinée par rapport à l'orbite géostationnaire. Il se peut également que le panneau soit un peu désaligné et / ou avec une planéité imparfaite, par exemple à cause d'un défaut de montage ou de déformations thermo-élastiques, de sorte que l'angle α de fonctionnement n'est pas parfaitement respecté. Ainsi, afin de pallier simplement à ces défauts, il peut être prévu de mettre en place, sur l'ensemble des bords du panneau 4, un déflecteur. Le déflecteur s'étend alors sur toute la périphérie des surfaces 5, 6 radiatives, en saillie par rapport à ces surfaces 5, 6. Le déflecteur bloque les rayons U du Soleil qui auraient pu atteindre les surfaces 5, 6 radiatives.

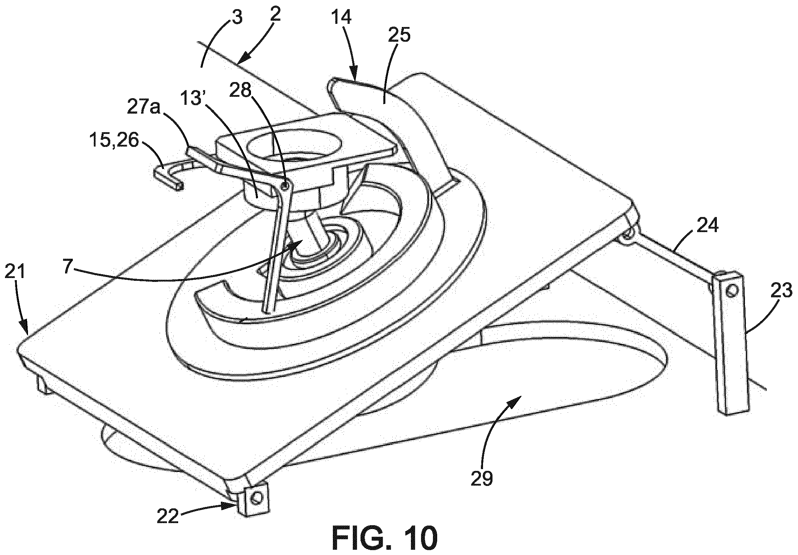

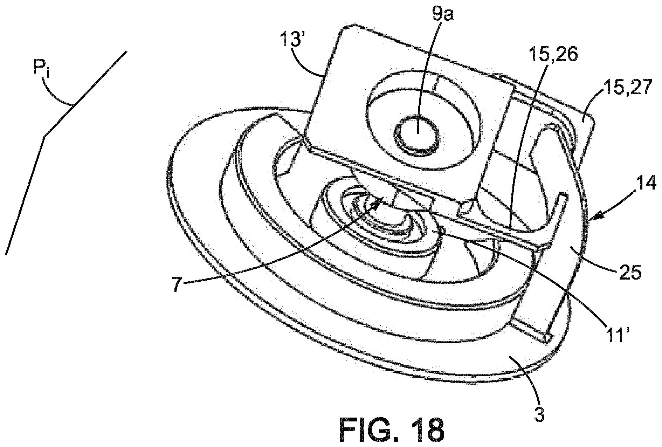

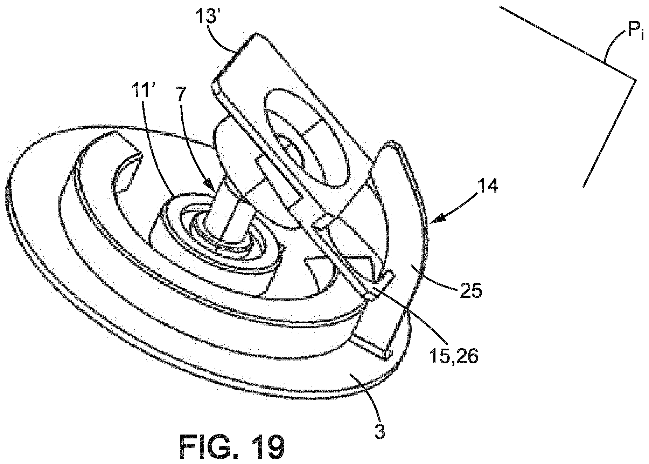

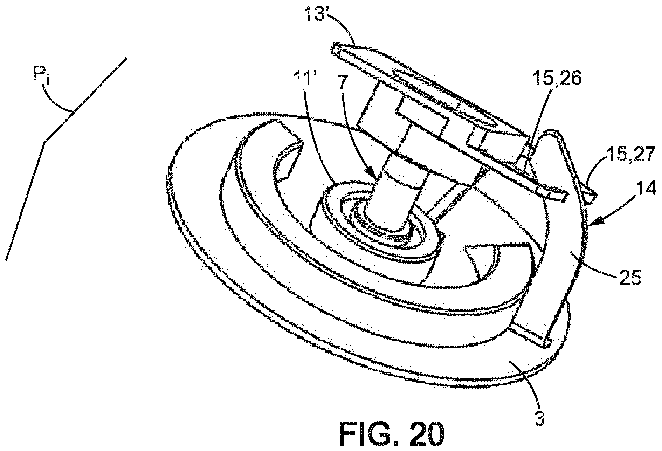

Les figures 10 à 20 illustrent un troisième mode de réalisation du radiateur 1 et de ses moyens d'assemblage, sur la face 3 nord du satellite 2. Ce mode de réalisation a la particularité de permettre au radiateur 1 de prendre une position pliée pour le lancement du satellite 2, et une position déployée, qui est la position dans laquelle le radiateur 1 est en fonctionnement optimal.

Dans ce troisième mode de réalisation, que l'on va maintenant décrire en détail, les moyens d'assemblage comprennent un mécanisme de déploiement du panneau 4. Le mécanisme de déploiement comprend une plaque **21** d'articulation, montée sur le satellite 2, par exemple sur la face 3 nord. La plaque 21 d'articulation comprend des moyens pour être pivotée, par rapport à la face 3 nord du satellite 2, de l'angle α de fonctionnement. A cet effet, par exemple, la plaque 21 est montée sur une charnière **22.** Deux pattes **23** en saillie verticale par rapport à la face 3 nord sont reliées à la plaque 21 d'articulation chacune grâce à une biellette **24,** articulée autour d'axes parallèle à l'axe de la charnière 22. La plaque 21 d'articulation supporte le pied 7 support et le système 12 de guidage du débattement.

Le rail 14 du système 12 de guidage présente deux faces **25** opposées, sensiblement lisses et s'élevant sensiblement perpendiculairement à la face 3 nord du satellite 2, pour guider l'élément 15 de type pince. Plus précisément, la pince 15 comprend deux bras **26, 27.** Un premier bras 26 est fixé rigidement au panneau 4, par exemple sur la bague extérieure du second palier 13. Le second bras 27 est monté pivotant autour d'un axe **28,** perpendiculaire à l'axe S de radiation, sur le panneau 4, et par exemple sur le boitier 13' du second palier 13. Les deux bras, respectivement 26, 27, s'étendent l'un vers l'autre jusqu'à une extrémité, respectivement 26a, 27a. La distance entre les deux extrémités 26a, 27a des bras 26, 27 est ajustée en fonction de l'épaisseur du rail 14, c'est-à-dire de la distance entre ses deux faces 25 lisses, pour ajuster le débattement du panneau 4 autour de l'axe R de rotation. Pour un débattement nul, la distance entre les extrémités 26a, 27a des bras est sensiblement égal à l'épaisseur du rail 14.

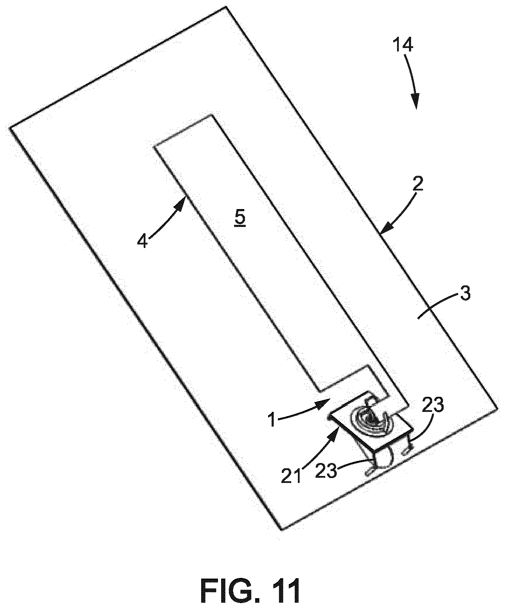

Le radiateur 1 peut alors prendre une position repliée, dans laquelle le panneau 4 est au-dessus de et parallèle à la face 3 nord du satellite, c'est-à-dire qu'une face 6 radiative est en vis-à-vis de la face 3 nord du satellite. A cet effet, le mécanisme de déploiement est initialement dans une première position, dans laquelle la plaque 21 d'articulation est levée de l'angle α de fonctionnement par rapport à la face 3 nord, par rotation de la biellette 24 et de la plaque 21 d'articulation autour de la charnière 22 (figures 10 et 11). En effet, grâce à l'inclinaison de la plaque 21 d'articulation, l'inclinaison de l'angle α de fonctionnement des surfaces radiatives par rapport à la face 3 nord est annulée. Une ouverture **29** sur la face 3 nord du satellite 2, découverte lorsque le radiateur 1 est en position pliée, permet notamment de faire passer les moyens de connexion fluidique du satellite au panneau 4 sans que les conduits flexibles ne soient gênés par le mouvement de la plaque 21 d'articulation.

Il convient de noter que le système 12 de guidage n'est alors pas opérationnel, les bras 26, 27 de la pince 15 n'étant pas encore engagés avec le rail 14. Plus précisément, lorsque le radiateur 2 est en position pliée, les bras 26, 27 sont situés à 180° du rail 14, autour de l'axe R de rotation. En outre, les extrémités 26a, 27a ne sont pas en vis-à-vis l'une de l'autre, mais le second bras 7 est pivoté autour de son axe sur le boitier 13' du second palier 13, de manière à éloigné son extrémité 27b de la face 3 nord : le second bras 27 est levé par rapport au premier bras 26.

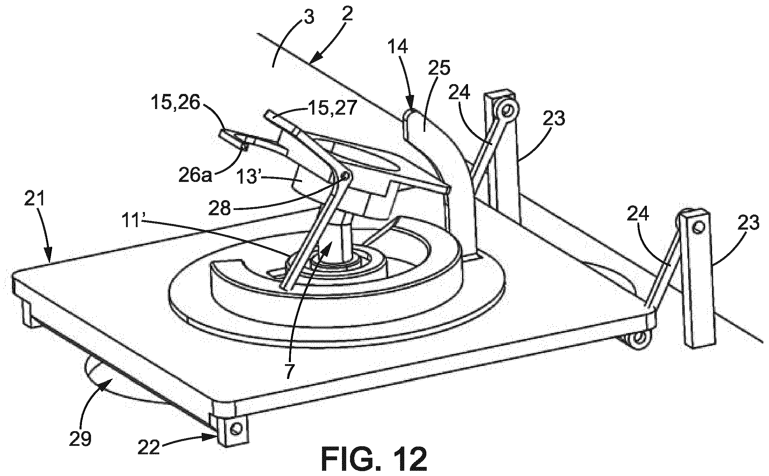

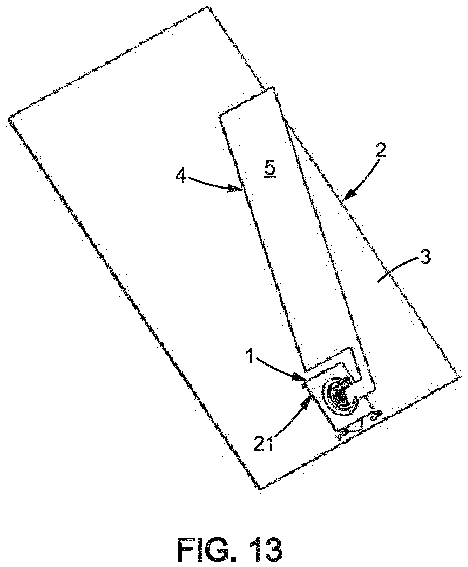

Afin de mettre le radiateur en position déployée, dans laquelle le panneau s'étend au-delà de la face 3 nord du satellite et dans laquelle il existe un plan dans lequel les faces 5, 6 radiatives forment un angle α de fonctionnement avec la face 3 nord, le mécanisme de déploiement est mis dans une deuxième position, dans laquelle la plaque 21 d'articulation est rabattue vers la face 3 nord du satellite, de sorte à être parallèle à la face 3 nord (figures 12 et 13). L'ouverture 29 sur la face 3 nord est alors recouverte au moins partiellement par la plaque 21 d'articulation. Les faces 5, 6 radiatives ne sont plus parallèles à la face 3 nord, mais sont inclinées de l'angle α de fonctionnement. Puis, le pied 7 support effectue une rotation de 180° autour de l'axe R de rotation, dans la direction selon laquelle le second bras 27 passe devant le rail 14 avant le premier bras 26. Le système 12 de guidage n'étant pas fonctionnel, la rotation du pied 7 support entraîne la rotation du panneau 4, qui se déplace pour s'étendre au-delà de la face 3 nord du satellite.

Il pourra cependant être prévu de ne pas rabattre totalement la plaque 21 d'articulation, laquelle forme alors un angle avec la face 3 nord. L'angle d'inclinaison entre les faces 5, 6 radiatives et la face nord correspond alors à l'angle α de fonctionnement, auquel on a retranché de l'angle d'inclinaison entre la plaque 21 d'articulation et la face 3 nord. Il est ainsi possible d'ajuster légèrement l'inclinaison entre les faces 5, 6 radiatives et la face 3 nord, de quelques degrés, en pratique de + ou - 5°, sans que l'angle α de fonctionnement, entre l'axe R de rotation et l'axe S de radiation, ne soit modifié pour autant. Les moyens d'assemblage participent alors à la compensation de l'inclinaison de l'orbite déjà mentionnée plus haut.

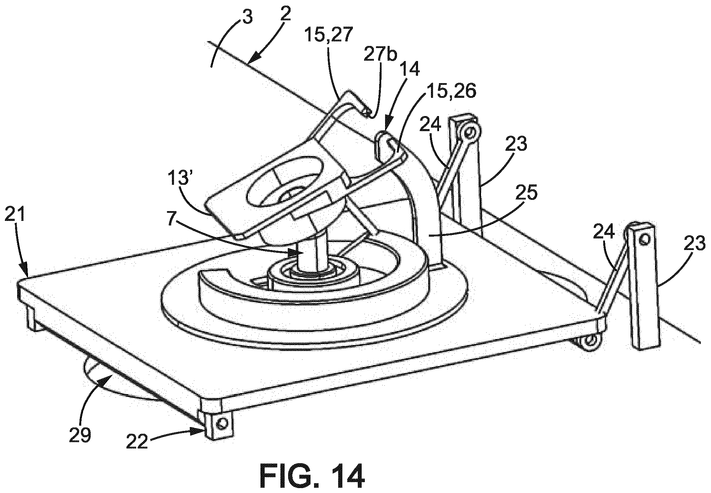

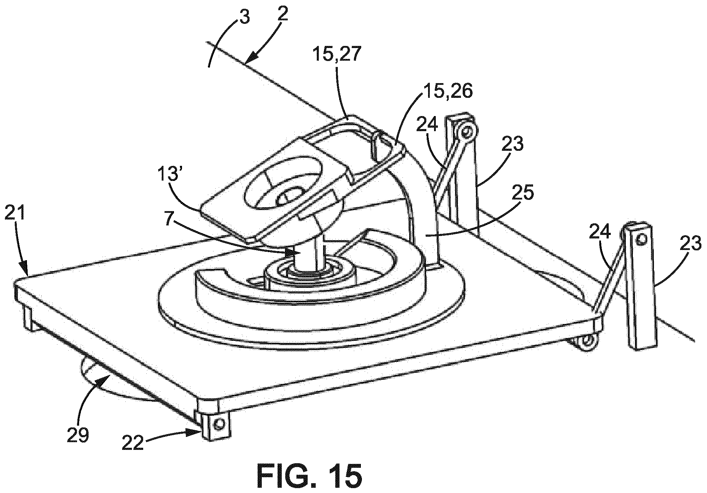

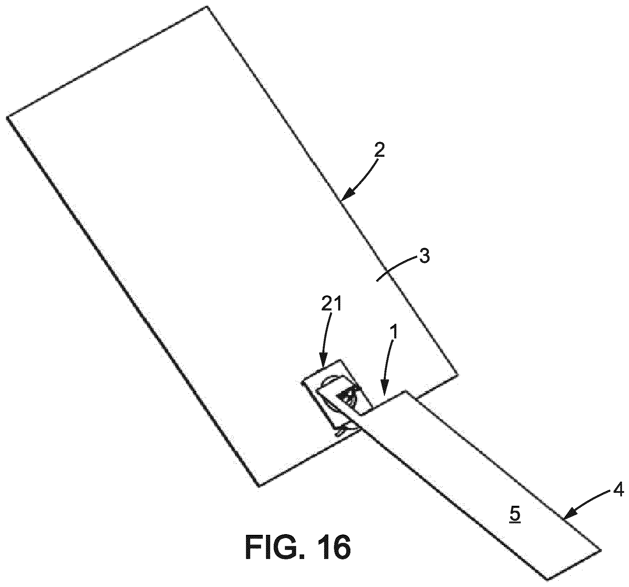

Dans une troisième position, une fois que le pied 7 a pivoté de 180°, l'extrémité 26a du premier bras 26 se retrouve en vis-à-vis d'une des faces 25 du rail 14, le second bras ayant pu dépasser le rail 14 (figure 14). Le second bras 27 est alors abaissé vers la face 3 nord par rotation autour de son axe 28 sur le boitier 13' du second palier 13, de sorte que son extrémité 27a vient en vis-à-vis de l'autre face 25 du rail 14. Eventuellement, les extrémités 26a, 27a des bras 26, 27 peuvent être en contact avec les surfaces 25 du rail 14. Toutefois, en pratique un jeu minimal est respecté. La pince 15 enserre alors le rail 14, rendant le système 12 de guidage fonctionnel. Le mécanisme de déploiement est alors dans une quatrième position (figures 15 et 16), et il est bloqué dans cette dernière position.

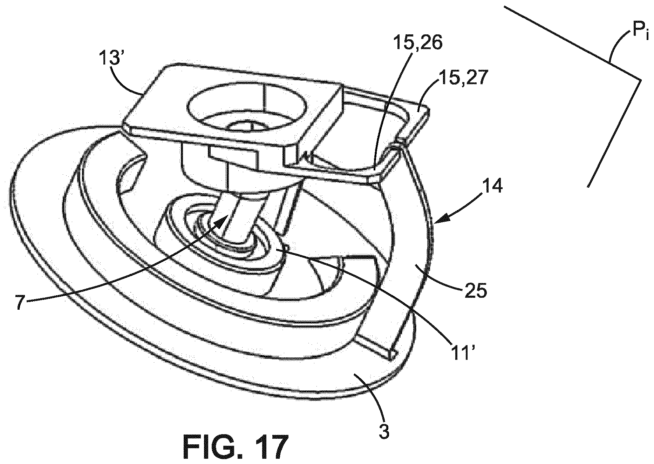

A partir de cette quatrième position, le radiateur 1 peut alors pivoter autour de l'axe R de rotation pour accompagner l'orbite du satellite 2, comme décrit précédemment. Les figures 17 à 20 illustrent le mouvement du pied 7 support, pour quatre positions du radiateur 1 correspondant aux positions précédemment décrites, le panneau 4 étant retiré sur ces figures pour découvrir le pied 7 support. Sur chacune de ces figures, il est également représenté le plan Pᵢ dans lequel l'inclinaison d'angle α de fonctionnement entre les surfaces 5, 6 radiatives peut être mesurée.

Des moyens de contrôle, qui peuvent être inclus dans les moyens 10 de pilotage et de motorisation, permettent d'automatiser le passage de la position pliée à la position déployée.

Dans les exemples présentés, l'angle α de fonctionnement est pris égal à 23,5°, c'est-à-dire égal à l'angle entre le plan P_{g} (plan équatorial) de l'orbite géostationnaire et le plan Pₑ de l'écliptique. Cependant, il se peut que la mission du satellite autorise une dérive Nord-Sud en orbite inclinée. Le satellite n'est alors plus exactement dans le plan Pg de l'orbite géostationnaire, mais dans un plan d'orbite inclinée, légèrement incliné par rapport au plan Pg de l'orbite géostationnaire équatoriale.

La dérive est prévisible, et peut être volontaire. Le satellite s'écarte naturellement de l'orbite équatoriale qui s'incline de l'ordre de 1 degré par an si l'on ne fait rien. Certaines missions, de navigation par exemple, autorisent de laisser dériver l'orbite de quelques degrés. D'autres missions de type internet ou TV directe n'autorisent aucune dérive. Le phénomène est donc prévisible et contrôlé en fonction du type de mission.

Afin de palier à cette inclinaison et maintenir les surfaces 5, 6 radiatives du panneau 4 du radiateur 1 parallèles au plan Pₑ de l'écliptique, l'angle α de fonctionnement est pris supérieur à 23,5°. Par exemple, lorsque l'inclinaison prévue est de 3°, ce qui est une valeur maximale de dérive, alors l'angle α de fonctionnement est pris égal à 26,5°. Une valeur intermédiaire de compromis pourrait être choisie. Les moyens 10 de pilotage et de motorisation comprennent alors un module de rattrapage, permettant de moduler la vitesse de rotation du pied 7 support pour compenser la dérive.
Le radiateur 1 décrit est de conception simple car il implique le contrôle autour d'un unique axe d'articulation, en l'occurrence l'axe R de rotation. Les coûts de conception, mais également de maintenance, sont réduits. En outre, le pied 7 support pivotant autour de l'axe R de rotation est peu encombrant. Par ailleurs, une fois l'angle α de fonctionnement fixé lors de la conception, il n'est pas nécessaire de mettre en oeuvre des moyens de réglage de l'angle α de fonctionnement pour suivre les déplacements du satellite 2 mis en poste en orbite. De légers ajustements peuvent être mis en oeuvre pour régler l'inclinaison des surfaces 5, 6 radiatives par rapport aux faces nord et sud du satellite 2.

## Revendications

1. Radiateur (**1**) pour satellite (**2**) apte à être mis à poste en orbite géostationnaire autour de la Terre (**T**) dans un plan incliné par rapport au plan de l'écliptique, le radiateur (**1**) comprenant au moins un panneau (**4**) présentant au moins une surface (**5, 6**) radiative, et comprenant :
- un pied (**7**) support portant le panneau (**4**),
- des moyens (**10**) de pilotage et de motorisation pour faire pivoter le pied support autour d'un axe (**R**) de rotation, et
- la surface (**5, 6**) radiative du panneau (**4**) est apte à être perpendiculaire à un axe (**S**) de radiation, l'axe (**S**) de radiation et l'axe (**R**) de rotation étant inclinés l'un par rapport à l'autre d'un angle (**α**) de fonctionnement non nul,
le radiateur étant **caractérisé en ce que** l'axe (**R**) de rotation est incliné par rapport à la surface radiative (**5, 6**) et **en ce que** ledit angle (**α**) correspond à l'angle d'inclinaison du plan de l'orbite du satellite (**2**) par rapport au plan de l'écliptique, l'angle (**α**) de fonctionnement étant fixe,
de sorte que pour toute rotation du pied (**7**) support autour de l'axe (**R**) de rotation grâce aux moyens (**10**) de pilotage et de motorisation, la surface radiative (**5, 6**) demeure parallèle au plan de l'écliptique.

2. Radiateur (**1**) selon la revendication 1, dans lequel le panneau (**4**) est monté pivotant autour de l'axe (**S**) de radiation, le radiateur (**1**) comprenant en outre un système (**12**) de guidage du débattement du panneau (**4**) limitant la rotation du panneau (**4**) autour de l'axe (**R**) de rotation, de manière à maintenir le panneau dans une orientation donnée par rapport au satellite (**2**).

3. Radiateur (**1**) selon la revendication 2, dans lequel le pied (**7**) support comprend deux portions (**8, 9**), à savoir :
- une première portion (**8**) apte à être montée sur la face (**3, 16**) support du satellite (**2**),
- une seconde (**9**) portion sur laquelle le panneau (**4**) est monté,
le panneau (**4**) étant monté sur la seconde portion (**9**) par l'intermédiaire d'un palier (**13**) pour autoriser la rotation du panneau (**4**) autour de l'axe (**S**) de radiation.

4. Radiateur (**1**) selon la revendication 3, dans lequel les deux portions (**8, 9**) du pied (**7**) support sont rectilignes et dans le prolongement l'une de l'autre, la première portion (**8**) s'étendant selon l'axe (**R**) de rotation et la deuxième portion s'étendant selon l'axe (**S**) de radiation.

5. Radiateur (**1**) selon l'une quelconque des revendications 2 à 4, dans lequel le système (**12**) de guidage du débattement comprend un rail (**14**), s'étendant parallèlement à l'axe (**R**) de rotation et une pince (**15**) fixée rigidement au panneau (**4**), les bras (**26, 27**) de la pince (**15**) coopérant avec le rail (**14**) pour limiter le débattement du panneau (**4**) autour de l'axe (**R**) de rotation.

6. Radiateur (**1**) selon l'une quelconque des revendications précédentes, dans lequel l'angle (**α**) de fonctionnement est de 23,5°.

7. Radiateur (**1**) selon l'une des revendications 1 à 5, dans lequel l'angle (**α**) de fonctionnement est supérieur à 23,5° pour un fonctionnement en orbite inclinée, le radiateur (**1**) comprenant alors de plus des moyens de modulation de la vitesse de rotation du pied (7) support.

8. Radiateur (**1**) selon l'une quelconque des revendications précédentes, dans lequel le panneau (**4**) comprend deux surfaces (**5, 6**) radiatives parallèles et orientées dans des directions opposées.

9. Radiateur (**1**) selon l'une quelconque des revendications précédentes, dans lequel le panneau (**4**) comprend un déflecteur placé sur toute la périphérie, en saillie par rapport à la surface (**5, 6**) radiative, pour bloquer une partie des rayons du Soleil.

10. Radiateur (**1**) selon l'une quelconque des revendications précédentes, comprenant en outre un capteur solaire relié aux moyens (**10**) de pilotage et de motorisation pour faire pivoter le pied (**7**) support, de manière à vérifier et/ou à asservir l'orientation du panneau (**4**) par rapport au Soleil.

11. Radiateur (**1**) selon l'une quelconque des revendications précédentes, comprenant des moyens de connexion fluidique aptes à être connectés avec des moyens de connexion complémentaire d'un satellite (**2**), les moyens de connexion fluidique incluant au moins un circuit (**19**) interne comprenant deux conduits flexibles passant à l'intérieur du pied (**7**) support du radiateur (**1**).

12. Radiateur (**1**) selon l'une des revendications 1 à 10, comprenant des moyens de connexion fluidique aptes à être connectés avec des moyens de connexion complémentaire d'un satellite (**2**), les moyens de connexion fluidique incluant au moins un circuit (**20**) externe comprenant deux conduits flexibles passant à l'extérieur du pied (**7**) support du radiateur (**1**).

13. Satellite (**2**) apte à être mis en orbite autour de la Terre, comprenant au moins un radiateur (**1**) selon l'une des revendications précédentes monté sur une face (**3**, **16**) support du satellite (**2**), le pied (**7**) support du radiateur (**1**) étant fixé sur le satellite (**2**) de sorte que l'axe (**R**) de rotation est perpendiculaire à une face de référence du satellite, la face de référence étant une face (**3**) nord ou une face (**17**) sud du satellite (**2**).

14. Satellite (**2**) selon la revendication 13, dans lequel le radiateur (**1**) peut prendre une position repliée dans laquelle le panneau (**4**) est contre la face (**3, 16**) support du satellite (**2**) sur laquelle il est fixé, et une position déployée dans laquelle le panneau (**4**) est amené incliné par rapport à la face (**3, 16**) support de l'angle (**α**) de fonctionnement.

## Patentansprüche

1. Radiator (**1**) für einen Satelliten (**2**), der dazu geeignet ist, in einer geostationären Umlaufbahn um die Erde (**T**) in einer zur Ekliptikebene geneigten Ebene positioniert zu sein, wobei der Radiator (**1**) zumindest eine Platte (**4**) umfasst, die zumindest eine Strahlungsfläche (**5, 6**) aufweist, und Folgendes umfasst:
- einen Stützfuß (**7**), der die Platte (**4**) trägt,
- Steuer- und Motorisierungsmittel (**10**), um den Stützfuß um eine Rotationsachse (**R**) zu schwenken, und
- wobei die Strahlungsfläche (**5, 6**) der Platte (**4**) dazu geeignet ist, senkrecht zu einer Strahlungsachse (**S**) zu sein, wobei die Strahlungsachse (**S**) und die Rotationsachse (**R**) in einem Arbeitswinkel (**α**) ungleich null zueinander geneigt sind,
wobei der Radiator **dadurch gekennzeichnet ist, dass** die Rotationsachse (**R**) in Bezug auf die Strahlungsfläche (**5, 6**) geneigt ist und dass der Winkel (**α**) dem Neigungswinkel der Bahnebene des Satelliten (**2**) in Bezug auf die Ekliptikebene entspricht, wobei der Arbeitswinkel (**α**) feststehend ist,
sodass bei jeder Rotation des Stützfußes (**7**) um die Rotationsachse (**R**) dank der Steuer- und Motorisierungsmittel (**10**) die Strahlungsfläche (**5, 6**) parallel zur Ekliptikebene bleibt.

2. Radiator (**1**) nach Anspruch 1, wobei die Platte (**4**) schwenkbar um die Strahlungsachse (**S**) montiert ist, wobei der Radiator (**1**) ferner ein System (**12**) zur Führung des Ausschlags der Platte (**4**) umfasst, das die Rotation der Platte (**4**) um die Rotationsachse (**R**) begrenzt, um die Platte in einer vorgegebenen Ausrichtung in Bezug auf den Satelliten (**2**) zu halten.

3. Radiator (**1**) nach Anspruch 2, wobei der Stützfuß (**7**) zwei Abschnitte (**8, 9**) umfasst, nämlich:
- einen ersten Abschnitt (**8**), der dazu geeignet ist, an der Stützfläche (**3, 16**) des Satelliten (**2**) montiert zu sein,
- einen zweiten Abschnitt (**9**), an dem die Platte (**4**) montiert ist,
wobei die Platte (**4**) über ein Lager (**13**) am zweiten Abschnitt (**9**) montiert ist, um die Rotation der Platte (**4**) um die Strahlungsachse (**S**) zuzulassen.

4. Radiator (**1**) nach Anspruch 3, wobei die beiden Abschnitte (**8, 9**) des Stützfußes (**7**) geradlinig und in jeweils der Verlängerung des anderen angeordnet sind, wobei der erste Abschnitt (**8**) sich entlang der Rotationsachse (**R**) erstreckt und der zweite Abschnitt sich entlang der Strahlungsachse (**S**) erstreckt.

5. Radiator (**1**) nach einem der Ansprüche 2 bis 4, wobei das System (**12**) zur Führung des Ausschlags eine Schiene (**14**), die sich parallel zur Rotationsachse (**R**) erstreckt, und eine starr an der Platte (**4**) befestigte Zange (**15**) umfasst, wobei die Arme (**26, 27**) der Zange (**15**) mit der Schiene (**14**) zusammenwirken, um den Ausschlag der Platte (**4**) um die Rotationsachse (**R**) zu begrenzen.

6. Radiator (1) nach einem der vorangehenden Ansprüche, wobei der Arbeitswinkel (**α**) 23,5° beträgt.

7. Radiator (1) nach einem der Ansprüche 1 bis 5, wobei der Arbeitswinkel (**α**) für einen Betrieb in einer geneigten Umlaufbahn größer als 23,5° ist, wobei der Radiator (**1**) dann außerdem Mittel zur Modulation der Rotationsgeschwindigkeit des Stützfußes (**7**) umfasst.

8. Radiator (**1**) nach einem der vorangehenden Ansprüche, wobei die Platte (**4**) zwei Strahlungsflächen (**5, 6**) umfasst, die parallel und in entgegengesetzte Richtungen ausgerichtet sind.

9. Radiator (**1**) nach einem der vorangehenden Ansprüche, wobei die Platte (**4**) einen über den gesamten Umfang angeordneten, in Bezug auf die Strahlungsfläche (**5, 6**) vorstehenden Deflektor umfasst, um einen Teil der Sonnenstrahlen zu blockieren.

10. Radiator (**1**) nach einem der vorangehenden Ansprüche, ferner umfassend einen mit den Steuer- und Motorisierungsmitteln (**10**) verbundenen Sensor zum Schwenken des Stützfußes (**7**), um die Ausrichtung der Platte (**4**) in Bezug auf die Sonne zur überprüfen und/oder zu regeln.

11. Radiator (**1**) nach einem der vorangehenden Ansprüche, umfassend Fluidverbindungsmittel, die dazu geeignet sind, mit Ergänzungsverbindungsmitteln eines Satelliten (**2**) verbunden zu sein, wobei die Fluidverbindungsmittel zumindest einen internen Kreislauf (**19**) einschließen, der zwei flexible, innerhalb des Stützfußes (**7**) des Radiators (1) verlaufende Leitungen umfasst.

12. Radiator (**1**) nach einem der Ansprüche 1 bis 10, umfassend Fluidverbindungsmittel, die dazu geeignet sind, mit Ergänzungsverbindungsmitteln eines Satelliten (**2**) verbunden zu sein, wobei die Fluidverbindungsmittel zumindest einen externen Kreislauf (**20**) einschließen, der zwei flexible, außerhalb des Stützfußes (**7**) des Radiators (**1**) verlaufende Leitungen umfasst.

13. Satellit (**2**), der dazu geeignet ist, in einer Umlaufbahn um die Erde positioniert zu sein, umfassend zumindest einen Radiator (**1**) nach einem der vorangehenden Ansprüche, der an einer Stützfläche (**3, 16**) des Satelliten (**2**) montiert ist, wobei der Stützfuß (**7**) des Radiators (**1**) so am Satelliten (**2**) befestigt ist, dass die Rotationsachse (**R**) senkrecht zu einer Referenzfläche des Satelliten ist, wobei die Referenzfläche eine Nordfläche (**3**) oder eine Südfläche (**17**) des Satelliten (**2**) ist.

14. Satellit **(**2) nach Anspruch 13, wobei der Radiator (**1**) eine gefaltete Position, in der die Platte (**4**) gegen die Stützfläche (**3, 16**) des Satelliten (**2**), an welcher er befestigt ist, gewandt ist, und eine entfaltete Position, in welcher die Platte (**4**) in Bezug auf die Stützfläche (**3, 16**) um den Arbeitswinkel (α) geneigt ist, einnehmen kann.

## Claims

1. Radiator (**1**) for a satellite (**2**) intended to be stationed in geostationary orbit around the earth (**T**) in a plane that is tilted relative to the ecliptic plane, the radiator (**1**) comprising at least one panel (**4**) having at least one radiative surface (**5, 6**), and comprising :
- a support member (**7**) bearing the panel (**4**),
- control and motorization means (**10**) for pivoting the support member about an axis of rotation (**R**), and
- the radiative surface (**5, 6**) of the panel (**4**) is capable of being perpendicular to an axis of radiation (**S**), the axis of radiation (**S**) and the axis of rotation (**R**) being tilted relative to each other by a non-zero operating angle (**α**),
the radiator being **characterized in that** the axis of rotation (**R**) is tilted relative to the radiative surface (**5, 6**) and **in that** said angle (**α**) corresponds to the tilt angle of the orbit plane of the satellite (**2**) relative to the ecliptic plane, the operating angle (α) being fixed,
such that for any rotation of the support member (**7**) about the axis of rotation (**R**) using the control and motorization means (**10**), the radiative surface (**5, 6**) remains parallel to the ecliptic plane.

2. Radiator (**1**) according to claim 1, in which the panel (**4**) is mounted pivoting about the axis of radiation (**S**), the radiator (**1**) also comprising a system (**12**) for guiding the range of rotation of the panel (**4**) limiting the rotation of the panel (**4**) about the axis of rotation (**R**), so as to keep the panel in a given orientation relative to the satellite (**2**).

3. Radiator (**1**) according to claim 2, in which the support member (**7**) comprises two portions (**8, 9**), namely:
- a first portion (**8**) capable of being mounted on the support face (**3, 16**) of the satellite (**2**),
- a second portion (**9**) on which the panel (**4**) is mounted,
the panel (**4**) being mounted on the second portion (**9**) via a bearing (**13**) in order to allow the rotation of the panel (**4**) about the axis of radiation (**S**).

4. Radiator (**1**) according to claim 3, in which the two portions (**8, 9**) of the support member (**7**) are rectilinear and each an extension of the other, the first portion (**8**) extending along the axis of rotation (**R**) and the second portion extending along the axis of radiation (**S**).

5. Radiator (**1**) according to any one of claims 2 to 4, in which the system (**12**) for guiding the range of rotation comprises a rail (**14**), extending parallel to the axis of rotation (**R**) and a clamp (**15**) rigidly fixed to the panel (**4**), the arms (**26, 27**) of the clamp (**15**) engaging with the rail (**15**) in order to limit the range of rotation of the panel (**4**) about the axis of rotation (**R**).

6. Radiator (**1**) according to any one of the preceding claims, in which the operating angle (α) is 23.5°.

7. Radiator (**1**) according to any one of claims 1 to 5, in which the operating angle (α) is greater than 23.5° for operation in tilted orbit, the radiator (**1**) then also comprising means for modulating the speed of rotation of the support member (7).

8. Radiator (**1**) according to any one of the preceding claims, in which the panel (**4**) comprises two parallel radiative surfaces (**5, 6**) oriented in opposite directions.

9. Radiator (**1**) according to any one of the preceding claims, in which the panel (**4**) comprises a deflector placed over the entire periphery, projecting relative to the radiative surface (**5, 6**), in order to block some of the sun's rays.

10. Radiator (**1**) according to any one of the preceding claims, also comprising a solar sensor linked to the control and motorization means (**10**) in order to pivot the support member (**7**), so as to verify and/or control the orientation of the panel (**4**) relative to the sun.

11. Radiator (**1**) according to any one of the preceding claims, comprising fluid connection means capable of being connected with additional connection means of a satellite (**2**), the fluid connection means including at least one internal circuit (**19**) comprising two flexible pipes passing on the inside of the support member (**7**) of the radiator (**1**).

12. Radiator (**1**) according to any one of claims 1 to 10, comprising fluid connection means capable of being connected with additional connection means of a satellite (**2**), the fluid connection means including at least one external circuit (**20**) comprising two flexible pipes passing on the outside of the support member (**7**) of the radiator (**1**).

13. Satellite (**2**) capable of being placed in orbit around the earth, comprising at least one radiator (**1**) according to any one of the preceding claims, mounted on a support face (**3, 16**) of the satellite (**2**), the support member (**7**) of the radiator (**1**) being fixed on the satellite (**2**) such that the axis of rotation (**R**) is perpendicular to a reference face of the satellite, the reference face being a north face (**3**) or a south face (**17**) of the satellite (**2**).

14. Satellite (**2**) according to claim 13, in which the radiator (**1**) can adopt a folded position in which the panel (**4**) is against the support face (**3, 16**) of the satellite (**2**) on which it is fixed, and a deployed position in which the panel (**4**) is brought into a position in which it is tilted relative to the support face (**3, 16**) by the operating angle (α).
